# EUROPÄISCHE PATENTSCHRIFT

(11) **EP 3 807 544 B1**
(45) Veröffentlichungstag und Bekanntmachung des Hinweises auf die Patenterteilung: **11.12.2024**
(21) Anmeldenummer: 18734138.3
(22) Anmeldetag: 15.06.2018
(51) Int. Cl.: F16B 23/00

(54) **VERFAHREN ZUM DREHFESTEN VERBINDEN ZWEIER BAUTEILE**
METHOD FOR CONNECTING TWO COMPONENTS FOR CONJOINT ROTATION
PROCÉDÉ POUR RELIER DEUX COMPOSANTS DE MANIÈRE SOLIDAIRE EN ROTATION

(43) Veröffentlichungstag der Anmeldung: 21.04.2021
(73) Patentinhaber: Bongartz, Nicole, 41464 Neuss (DE)
(72) Erfinder: Bongartz, Nicole, 41464 Neuss (DE)
(74) Vertreter: Paul & Albrecht Patentanwälte PartG mbB
(86) Internationale Anmeldenummer: PCT/EP2018/066029
(87) Internationale Veröffentlichungsnummer: WO 2019/238250

(56) Entgegenhaltungen:
- DE-U1- 29 816 210
- US-A- 5 012 706
- US-A1- 2006 266 168
- US-A1- 2013 213 193

## Beschreibung

Die vorliegende Erfindung betrifft ein Verfahren zum drehfesten Verbinden zweier Bauteile, nämlich einer Schraube und eines Drehwerkzeugs, bezüglich der Längsachse des als Schraube ausgebildeten Bauteils, wobei eines der Bauteile ein äußeres Mitnahmeprofil mit außenliegenden Antriebsflächen und das andere Bauteil ein zu dem äußeren Mitnahmeprofil komplementäres inneres Mitnahmeprofil mit innenliegenden Antriebsflächen aufweist, indem die Mitnahmeprofile der Bauteile axial zusammengesteckt werden, um durch das Zusammenwirken der Mitnahmeprofile eine formschlüssige, drehfeste Verbindung der Bauteile zu erzielen, wobei
- die Mitnahmeprofile jeweils eine Profilachse definieren und die Profilachse des als Schraube ausgebildeten Bauteils koaxial zu dessen Längsachse verläuft,
- die Antriebsflächen des Bauteils mit dem äußeren Mitnahmeprofil gegenüber der Profilachse des Bauteils geneigt sind und sich zu dem freien Ende des Bauteils hin der Profilachse annähern,
- die Antriebsflächen des Bauteils mit dem inneren Mitnahmeprofil gegenüber der Profilachse des Bauteils geneigt sind und sich zu dem freien Ende des Bauteils von der Profilachse entfernen und
- die Mitnahmeprofile derart komplementär zueinander gewählt sind, dass die geneigten Antriebsflächen der Bauteile beim axialen Zusammenstecken der Bauteile flächig in Kontakt miteinander kommen, so dass durch das Zusammenwirken der Mitnahmeprofile eine kraftschlüssige Verbindung und/oder klemmende Verbindung, über welche die Bauteile axial miteinander verbunden werden, zwischen den Bauteilen entsteht.

Zudem betrifft die Offenbarung ein Bauteil zur Verwendung im erfindungsgemäßen Verfahren, insbesondere in der Form einer Schraube mit einem Schaft, der eine Längsachse der Schraube definiert und an seinem einen freien Ende - dem Kopfende - ein Mitnahmeprofil mit innen- oder außenliegenden Antriebsflächen aufweist, das eine koaxial zu der Längsachse liegende Profilachse definiert, wobei die Antriebsflächen des Mitnahmeprofils gegenüber der Profilachse geneigt sind, und wobei sich die inneren Antriebsflächen eines inneren Mitnahmeprofils zum freien Ende des Mitnahmeprofils hin von der Profilachse entfernen und sich die äußeren Antriebsflächen eines äußeren Mitnahmeprofils zum freien Ende des Mitnahmeprofils hin der Profilachse annähern.

Ferner betrifft die Offenbarung ein Bauteil in der Form eines Drehwerkzeugs zur Verwendung im erfindungsgemäßen Verfahren, das an einem Ende ein Mitnahmeprofil mit innen- oder außenliegenden Antriebsflächen aufweist, das eine Profilachse definiert, wobei die Antriebsflächen des Mitnahmeprofils gegenüber der Profilachse geneigt sind, und wobei sich die äußeren Antriebsflächen eines äußeren Mitnahmeprofils zum freien Ende des Mitnahmeprofils hin der Profilachse annähern und sich die inneren Antriebsflächen eines inneren Mitnahmeprofils zu einer Aufnahmeöffnung des Mitnahmeprofils hin von der Profilachse entfernen.

Schließlich betrifft die Offenbarung ein Kit mit einer Schraube und einem Drehwerkzeug zur Verwendung im erfindungsgemäßen Verfahren.

Schrauben und Drehwerkzeuge sind aus dem Stand der Technik in unterschiedlichen Ausgestaltungen bekannt. Dabei umfassen die Schrauben einen Schraubenschaft mit einem Außengewinde, an dessen oberem Endbereich ein Mitnahmeprofil zur Kopplung mit einem Drehwerkzeug vorgesehen ist, das in der Regel an einem Schraubenkopf ausgebildet ist. Die Drehwerkzeuge sind beispielsweise in Form von Ring- oder Maulschlüsseln ausgebildet oder umfassen auswechselbare Bits, die mittels eines Bithalters mit einem Antrieb, beispielsweise in Form eines Handgriffs oder eines Ackuschraubers verbunden werden. Alternativ kann der Bithalter über einen Adapter zum wechselnden Einsatz mit einem Schraubendrehergriff oder einem abgewinkelten Griff, mit einer Knarre, einem Drehmomentschlüssel, einem Akkuschrauber oder einem Ratschenschrauber verbunden werden.

Schraube und Drehwerkzeug werden zum Übertragen eines Drehmoments von dem Drehwerkzeug auf die Schraube mit komplementär zueinander ausgebildeten Mitnahmeprofilen angeboten. Hierzu weist eines der beiden Bauteile an einem seiner freien Enden ein äußeres Mitnahmeprofil mit außenliegenden Antriebsflächen und das andere Bauteil an seinem einen freien Ende ein zu dem äußeren Mitnahmeprofil komplementäres inneres Mitnahmeprofil mit innenliegenden Antriebsflächen auf. Die Mitnahmeprofile sind beispielsweise in der Form eine Innensechskants, eines Außensechskants, eines Torx-Profils sowie eines Kreuzschlitzprofils oder Schlitzprofils ausgebildet. Nach dem Koppeln des inneren Mitnahmeprofils mit dem äußeren Mitnahmeprofil liegen die Mitnahmeprofile mit Spiel aneinander an. Dies führt dazu, dass sich die Mitnahmeprofile in ungewollter Weise voneinander lösen können es weiterhin auch nicht möglich ist, die Mitnahmeprofile axial sauber zueinander auszurichten. Um die Handhabung beim Eindrehen und Lösen der Schraube mit dem Drehwerkzeug zu vereinfachen, werden zwar Drehwerkzeuge, die mit einem Magnet versehen sind, oder ferromagnetische Drehwerkzeuge, die mit einem Magnet magnetisierbar sind, angeboten. Dies ist jedoch mit zusätzlichem Aufwand verbunden. Außerdem kann durch die Verwendung eines magnetischen Drehwerkzeugs eine koaxiale Ausrichtung der Mitnahmeprofile auch nicht erreicht werden. Eine solche koaxiale Ausrichtung ist jedoch erforderlich, um Schraubenverbindungen in automatische Herstellungsprozesse einbinden zu können.

Zur Behebung dieser Problematik ist aus der DE 10 2005 011 734 A1 bekannt, bei einem Drehwerkzeug zum Eindrehen und Lösen sogenannter Torx-Schrauben die Antriebsfläche unter einem spitzen Winkel geneigt zur Profilachse auszubilden, so dass beim axialen Zusammenstecken der Mitnahmeprofile des Drehwerkzeugs und der Schraube ein Klemmsitz entsteht und somit keine zusätzlichen Haltemittel erforderlich sind, um die Schraube in ein Gewinde einzudrehen. In ähnlicher Weise ist aus der WO 2013/062895 A1 und US 2010/0269644 A1 bekannt, die Antriebsflächen von Schraube und Drehwerkzeug geneigt auszubilden, um einen Klemmsitz zwischen den Bauteilen zu erzeugen.

Ein Problem, das beim Eindrehen und Lösen von Schrauben immer wieder auftritt besteht darin, dass die Mitnahmeprofile insbesondere im Bereich der Kanten beschädigt werden, wenn die zum Eindrehen/Lösen der Schraube erforderlichen Drehmomente zu hoch sind.

Aufgabe der vorliegenden Erfindung ist es daher, ein Verfahren zum drehfesten Verbinden einer Schraube und eines Drehwerkzeugs der eingangsgenannten Art derart auszugestalten, dass eine hohe Kraft- beziehungsweise Drehmomentübertragung ohne Beschädigungen der Mitnahmeprofile möglich ist. Des Weiteren sollen eine Schraube und ein Drehwerkzeug sowie ein Kit, das eine Schraube und ein Drehwerkzeug umfasst, angegeben werden, die zur Durchführung des Verfahrens geeignet sind.

Die Erfindung ist ein Verfahren gemäß Anspruch 1. Diese Aufgabe ist bei einem Verfahren der eingangs genannten Art dadurch gelöst, dass Bauteile verwendet werden bei denen die Antriebsflächen der Mitnahmeprofile in den Kontaktbereichen, in denen sie flächig in Kontakt/Eingriff kommen, eine konstante Neigung gegenüber ihrer Profilachse aufweisen, die bei allen Antriebsflächen beider Bauteile gleich ist, und
dass ein Bauteil mit einem äußeren Mitnahmeprofil verwendet wird, bei dem die Antriebsflächen im Querschnitt sämtlich konkav oder sämtlich konvex, d. h. nach innen oder nach außen gekrümmt ausgebildet sind und ein Bauteil mit einem zu dem äußeren Profil komplementären inneren Mitnahmeprofil verwendet wird, dessen Antriebsflächen komplementär konvex/konkav zu den Antriebsflächen des äußeren Mitnahmeprofils gekrümmt sind, derart, dass im zusammengesteckten Zustand die Antriebsflächen der beiden Bauteile in Umfangsrichtung betrachtet beidseits des Scheitelpunkts der konkaven/konvexen Krümmung flächig in Kontakt/Eingriff aneinander kommen, und dass die Mitnahmeprofile so ausgebildet sind, dass sie in den zwischen den Antriebsflächen liegenden Übergangsbereichen nicht in Kontakt miteinander kommen.

Der vorliegenden Erfindung liegt somit die Überlegung zugrunde beim Zusammenstecken der beiden Bauteile zusätzlich zu einer formschlüssigen und drehfesten Verbindung auch eine kraftschlüssige und/oder klemmende Verbindung zwischen Schraube und Drehwerkzeug herzustellen, über welche die Bauteile axial miteinander verbunden und koaxial zueinander ausgerichtet sind. Hierdurch werden die beiden Bauteile in koaxialer Ausrichtung der Mitnahmeprofile spielfrei miteinander verbunden, so dass die Bauteile in automatisierten Prozessen einsetzbar sind. Um die kraftschlüssige und/oder klemmende Verbindung zwischen den beiden Bauteilen zu erzielen, weisen die Bauteile korrespondierende Mitnahmeprofile auf mit konusartig geneigten Angriffsflächen. Die Neigung der Antriebsflächen gegenüber der Profilachse wird dabei entlang der Scheitellinie der konkaven/konvexen Antriebsfläche gemessen. Die Mitnahmeprofile sind derart komplementär zueinander gewählt, dass die geneigten Antriebsflächen der Bauteile beim Zusammenstecken der Bauteile in Umfangsrichtung betrachtet beidseits des Scheitelpunkts der konkaven/konvexen Krümmung flächig in Kontakt/Eingriff miteinander kommen, während ein Kontakt in den zwischen den Antriebsflächen liegenden Übergangsbereichen vermieden wird. Beim axialen Zusammenstecken der beiden Mitnahmeprofile werden somit die Angriffsflächen exakt zueinander ausgerichtet, und die Drehmomentübertragung findet ausschließlich oder im Wesentlichen über die reibschlüssige Verbindung zwischen den beiden Bauteilen statt. Eine Beschädigung in Kantenbereichen wird vollständig vermieden, da die Mitnahmeprofile zwischen den Antriebsflächen liegenden Übergangsbereichen nicht miteinander in Kontakt stehen.

Die Anordnung ist so getroffen, dass zwischen den korrespondierenden Antriebsflächen der beiden Bauteile Kontaktzonen gebildet werden, die sich in Umfangsrichtung betrachtet von einer Seite des Scheitelpunkts der konkaven/konvexen Krümmung über den Scheitelpunkt hinweg zu der gegenüberliegenden Seite des Scheitelpunkts erstreckt. Insbesondere werden Bauteile verwendet, deren Antriebsflächen derart komplementär ausgebildet sind, dass die Antriebsflächen der beiden Bauteile in Umfangsrichtung betrachtet über wenigstens 25 %, insbesondere wenigstens 40 % und bevorzugt wenigstens 60 % ihrer Erstreckung in Umfangsrichtung miteinander in flächigen Kontakt stehen.

Erfindungsgemäß können Bauteile verwendet werden, deren Antriebsflächen über ihre Länge einen parabelsegmentförmigen Querschnitt im Kontaktbereich besitzen.

Alternativ können auch Bauteile verwendet werden, bei denen die Antriebsflächen der Mitnahmeprofile über ihre Länge einen kreisbogensegmentförmigen Querschnitt mit einem über die axiale Länge konstanten Radius im Kontaktbereich besitzen. In diesem Fall können die Antriebsflächen über einen zylindrischen Fräser hergestellt werden, der entsprechend des Winkels, um welchen die Antriebsflächen gegenüber der Profilachse geneigt sein sollen, gegenüber der Profilachse angestellt wird. Ebenso können Bauteile verwendet werden, bei denen die Antriebsflächen der Mitnahmeprofile einen kreisbogensegmentförmigen Querschnitt besitzen, wobei der Radius des kreisbogensegmentförmigen Querschnitts sich über die Länge der Antriebsflächen in Kontaktbereich kontinuierlich verändert. In diesem Fall können die Mitnahmeflächen über einen Fräser hergestellt werden, der eine dem gewünschten Neigungswinkel der Antriebsflächen entsprechende Konizität besitzt.

Gemäß einer Ausführungsform der Erfindung ist vorgesehen, dass Bauteile mit äußerem Mitnahmeprofil und/oder mit innerem Mitnahmeprofil verwendet werden, bei denen die zwischen den Antriebsflächen liegenden Übergangsbereiche eine entgegengesetzte Krümmung wie die Antriebsflächen aufweisen, wobei die Krümmung der Übergangsbereiche des äußeren Mitnahmeprofils kleiner als die Krümmung der Übergangsbereiche des inneren Mitnahmeprofils ist, wenn die Antriebsflächen des äußeren Mitnahmeprofils konkav gekrümmt ausgebildet sind, so dass der Scheitelpunkt der Krümmung in Richtung der Profilachse weist, und die Krümmung der Übergangsbereiche des äußeren Mitnahmeprofils kleiner als die Krümmung der Übergangsbereiche des inneren Mitnahmeprofils ist, wenn die Antriebsflächen des äußeren Mitnahmeprofils konvex gekrümmt sind. Insbesondere kann vorgesehen sein, dass die Übergangsbereiche des Bauteils mit äußerem Mitnahmeprofil und/oder des Bauteil mit innerem Mitnahmeprofil kreisbogensegmentförmig im Querschnitt ausgebildet sind, wobei die Radien der Übergangsbereiche des äußeren Mitnahmeprofils größer als die Radien der Übergangsbereiche des inneren Mitnahmeprofils sind, wenn die Antriebsflächen des äußeren Mitnahmeprofils konkav gekrümmt ausgebildet sind, so dass der Scheitelpunkt der Krümmung zu der Profilachse weist, und die Radien der Übergangsbereiche des äußeren Mitnahmeprofils kleiner als die Radien der Übergangsbereiche des inneren Mitnahmeprofils sind, wenn die Antriebsflächen des äußeren Mitnahmeprofils konvex gekrümmt sind, und wobei die Radien der Übergangsbereiche über die Länge der Antriebsflächen bevorzugt konstant sind.

Bei diesen Ausführungsformen gehen die Übergangsbereiche und die Antriebsflächen bevorzugt stetig ineinander über, so dass eine Kantenbildung vermieden wird.

Alternativ ist es möglich, die Übergangsbereiche durch ebene Flächen zu bilden.

Der Neigungswinkel der Antriebsflächen zur Profilachse wird in Abhängigkeit von der Länge der Antriebsflächen in der Profilachsenrichtung gewählt. Dabei gilt grundsätzlich, dass je größer die Erstreckung der Antriebsflächen entlang der jeweiligen Profilachse ist, umso größer der Neigungswinkel der geneigten Antriebsflächen zur Profilachse ist. Bevorzugt werden Bauteile verwendet, dass Bauteile verwendet werden, bei denen die Antriebsflächen der Mitnahmeprofile in dem Kontaktbereich um wenigstens 1°, insbesondere um wenigstens 2° gegenüber der Profilachse des jeweiligen Bauteils geneigt sind, und/oder dass Bauteile verwendet werden, bei denen die geneigten Antriebsflächen der Mitnahmeprofile um höchstens 8°, bevorzugt um höchstens 5° gegenüber der jeweiligen Profilachse geneigt sind, und/oder dass Bauteile verwendet werden.

Dabei werden bevorzugt Bauteile verwendet, bei denen die Antriebsflächen der Mitnahmeprofile im Kontaktbereich um wenigstens 1,5°, insbesondere wenigstens 2° und höchstens 3,5°, bevorzugt um 3° gegenüber der Profilachse des jeweiligen Bauteils geneigt sind.

Erfindungsgemäß können ferner Bauteile verwendet werden, deren Mitnahmeprofile in Umfangsrichtung betrachtet 3, 4 oder 6 nebeneinanderliegenden Antriebsflächen mit dazwischen liegenden Übergangsbereichen aufweisen. Dabei können Bauteile verwendet werden deren Mitnahmeprofile den Querschnitt eines Vielrunds besitzen, wobei insbesondere Bauteile verwendet werden, deren Mitnahmeprofile den Querschnitt eines Vielrunds mit spitzbogenförmigen Armen aufweisen und/oder Bauteile verwendet werden, deren Mitnahmeprofile den Querschnitt eines Vielrunds mit sechs Armen aufweisen.

Ebenso können Bauteile verwendet werden, deren Mitnahmeprofile als Torx-Profil mit zur jeweiligen Profilachse geneigten Antriebsflächen ausgebildet sind. Durch den Einsatz von hexalobulären Torx-Profilen wie Torx, Torx-TR, Torx Plus und Torx Plus Security können hohe Drehmomente von dem Drehwerkzeug auf die Schraube übertragen werden, ohne die Schraube und das Drehwerkzug zu beschädigen.

Die Offenbarung beschreibt auch ein Bauteil in der Form einer Schraube der eingangs genannten Art, wobei die Antriebsflächen des Mitnahmeprofils jeweils die gleiche, über die axiale Länge eines definierten Kontaktbereichs, mit dem das Mitnahmeprofil mit einem Mitnahmeprofil eines Drehwerkzeugs in Kontakt/Eingriff zu bringen ist, konstante Neigung gegenüber der Profilachse aufweisen, und wobei die geneigten Antriebsflächen des Mitnahmeprofils im Querschnitt sämtlich konkav oder sämtlich konvex, d. h. nach innen oder nach außen gekrümmt ausgebildet sind, wobei sie jeweils symmetrisch zu ihrer die Profilachse einschließenden Bereiche Längsmittelebene ausgebildet sind.

Wie schon ausgeführt können die Antriebsflächen dabei einen parabelsegmentförmigen Querschnitt oder kreisbogensegmentförmigen Querschnitt im Kontaktbereich besitzen, wobei bei einer kreisbogensegmentförmigen Ausgestaltung der Radius im Kontaktbereich über die axiale Länge der Antriebsflächen konstant oder kontinuierlich veränderlich sein kann.

In bevorzugter Weise beträgt die Schlüsselweite des Mitnahmeprofils dem 1,6-fachen des Krümmungsradius der Antriebsflächen ± 20 %.

Weiterhin beschreibt die Offenbarung ein Bauteil in der Form eines Drehwerkzeugs der eingangs genannten Art, wobei die Antriebsflächen des Mitnahmeprofils jeweils die gleiche, über die axiale Länge eines definierten Kontaktbereichs, mit dem das Mitnahmeprofil mit einem Mitnahmeprofil eines zu drehenden Bauteils, insbesondere in der Form einer Schraube, in Kontakt/Eingriff zu bringen ist, konstante Steigung gegenüber der Profilachse aufweisen, und wobei die geneigten Antriebsflächen des Mitnahmeprofils im Querschnitt sämtlich konkav oder sämtlich konvex, d. h. nach innen oder nach außen gekrümmt ausgebildet sind, wobei sie jeweils symmetrisch zu ihrer die Profilachse einschließenden Bereich Längsmittelebene ausgebildet sind.

Dabei können die Antriebsflächen einen parabelsegmentförmigen Querschnitt im Kontaktbereich besitzen. Alternativ können sie auch einen kreisbogensegmentförmigen Querschnitt mit einem über die axiale der Antriebsflächen konstanten Kontaktbereich oder mit einem über die axiale Länge der Antriebsflächen sich kontinuierlich verändernden Radius im Kontaktbereich aufweisen.

In allgemein üblicher Weise kann das Drehwerkzeug in Form eines Bits ausgebildet sein, in dem ein inneres Mitnahmeprofil ausgebildet ist.

Alternativ kann das Drehwerkzeug in Form eines Ringschlüssels ausgebildet sein, der einen Werkzeugschaft aufweist, der an wenigstens einem axialen Ende ein inneres Mitnahmeprofil aufweist, das das Drehwerkzeug quer zu dessen Schaftachse durchsetzt.

Bezüglich weiterer Ausgestaltungen und Vorteile der Schraube und des Drehwerkzeugs wird zur Vermeidung von Wiederholungen auf die vorstehenden Ausführungen im Zusammenhang mit dem erfindungsgemäßen Verfahren zum drehfesten Verbinden zweier Bauteile nämlich einer Schraube und eines Drehwerkzeugs verwiesen.

Sowohl bei der Schraube als auch bei dem Drehwerkzeug sind vorzugsweise zwischen den Antriebsflächen die Übergangsbereiche vorgesehen, die eben ausgebildet sind oder eine umgekehrte Krümmung wie die Antriebsflächen aufweisen. Die Übergangsbereiche können kreisbogensegmentförmig im Querschnitt ausgebildet sein, wobei die Radien der kreisbogensegmentförmigen Übergangsbereiche über die axiale Länge der Antriebsflächen bevorzugt konstant sind. Zweckmäßigerweise gehen die Übergangsbereiche und die Antriebsflächen stetig ineinander über.

Ferner kann vorgesehen sein, dass die Antriebsflächen des Mitnahmeprofils in dem Kontaktbereich um wenigstens 1°, um wenigstens 2° gegenüber der Profilachse geneigt sind, und/oder dass die geneigten Antriebsflächen des Mitnahmeprofils um höchstens 8°, bevorzugt um höchstens 5° gegenüber der Profilachse geneigt sind, und/oder dass die Antriebsflächen stetig geneigt sind und insbesondere eine konstante Steigung aufweisen. Insbesondere können die geneigten Antriebsflächen des Mitnahmeprofils im Kontaktbereich um wenigstens 1,5° und höchstens 3,5° und bevorzugt um 3° gegenüber der Profilachse geneigt sein. Wesentlich ist, dass sämtliche Antriebsflächen bei den Bauteilen identisch ausgebildet sind.

Schließlich wird die Aufgabe der vorliegenden Erfindung auch durch ein Kit gelöst, das dadurch gekennzeichnet ist, dass die Antriebsflächen der Mitnahmeprofile der beiden Bauteile in den Kontaktbereichen, in denen sie flächig in Kontakt/Eingriff kommen, wenn sie axial zusammengesteckt werden, eine konstante Neigung gegenüber ihrer Profilachse aufweisen, die bei allen Antriebsflächen beider Bauteile gleich ist, und die Krümmung der Antriebsflächen der beiden Bauteile derart komplementär zueinander sind, dass die Antriebsflächen der beiden Bauteile in Umfangsrichtung beidseits des Scheitelpunkts der konkaven/konvexen Krümmung der Antriebsflächen flächig in Kontakt/Eingriff kommen, und dass die Mitnahmeprofile so ausgebildet sind, dass sie in den zwischen den Antriebsflächen liegenden Übergangsbereichen nicht in Kontakt miteinander kommen, wenn die Mitnahmeprofile axial zusammen gesteckt werden.

Weitere Merkmale und Vorteile der vorliegenden Offenbarung werden anhand der nachfolgenden Beschreibung einer Ausführungsform der Bauteile unter Bezugnahme auf die beiliegende Zeichnung deutlich. In der Zeichnung zeigt:
- Figur 1: eine perspektivische Ansicht einer Schraube mit einem äu-ßeren Mitnahmeprofil,

- Figur 2: eine Draufsicht auf den Schraubenkopf der Schraube aus Figur 1,
- Figur 3: eine perspektivische Ansicht eines als Bit ausgebildeten Werkzeugs mit innerem Mitnahmeprofil,

- Figur 4: das Bit aus Figur 3 von unten,

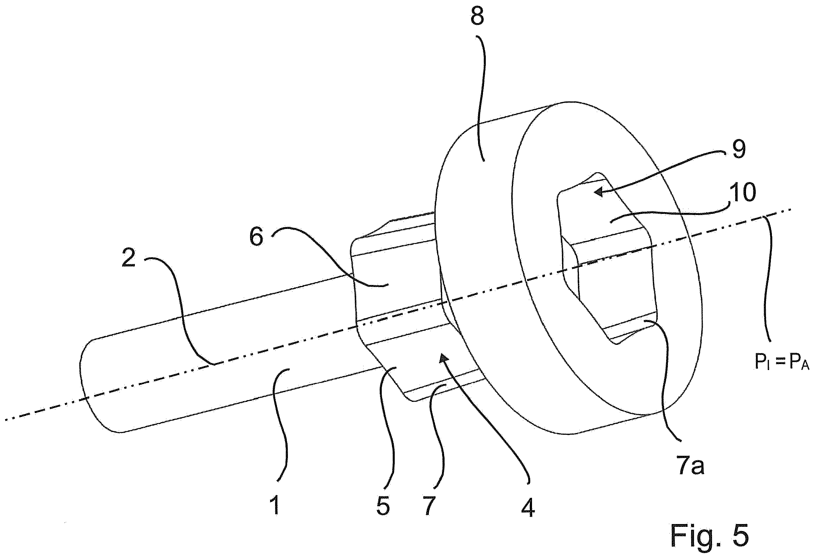

- Figur 5: perspektivische Ansicht der Schraube aus den Figuren 1 und 2 und dem Bit gemäß den Figuren 3 bis 4 beim axialen Zusammenstecken,

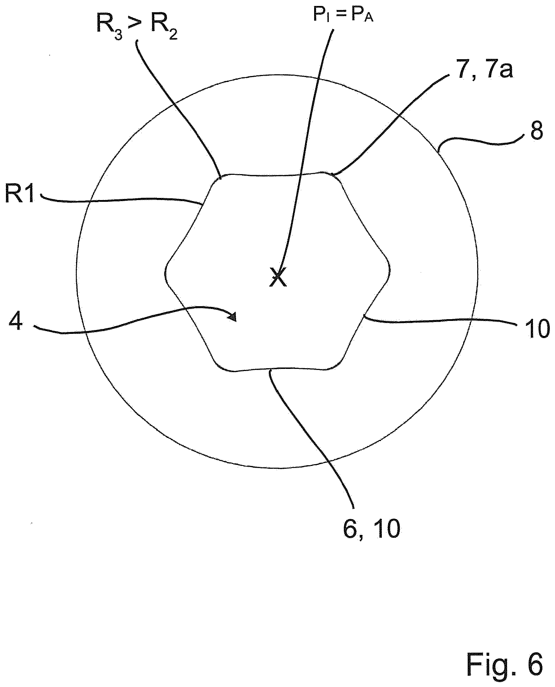

- Figur 6: in Draufsicht die Anordnung aus Figur 5 im zusammengeschobenen Zustand,
- Figur 7: das Bit aus Figur 4 mit gekennzeichneten Kontaktzonen,

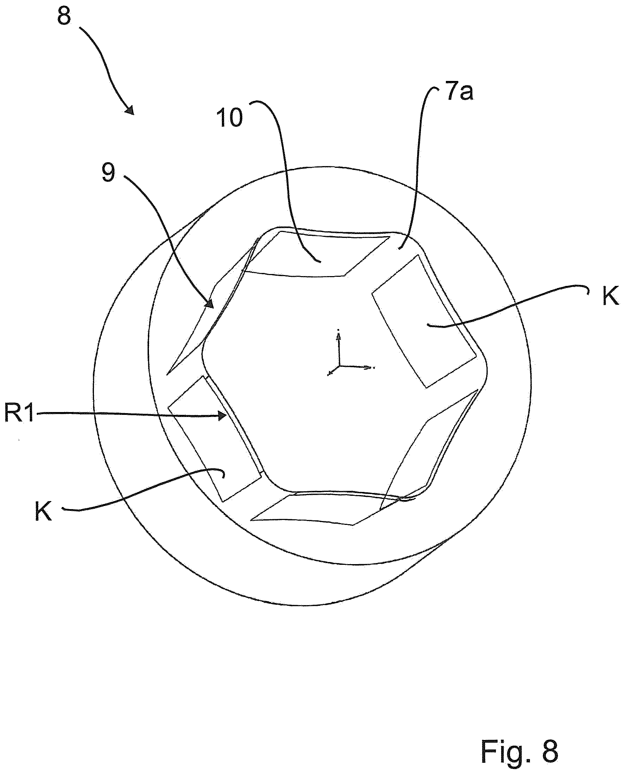

- Figur 8: das Bit in perspektivischer Ansicht mit gekennzeichneten Kontaktzonen,
- Figur 9: eine schematische Vorderansicht einer Schraube mit einem inneren Mitnahmeprofil und eines korrespondierenden Bits,

- Figur 10: eine perspektivische Ansicht der Schraube und des Bits aus Figur 9,
- Figur 11: den Vorgang des Zusammensteckens der Schraube und des Bits aus Figur 9,
- Figur 12: die Schraube und das Bit im zusammengesteckten Zustand,
- Figur 13: eine perspektivische Ansicht einer Schraube mit einem inneren Mitnahmeprofil und eines korrespondierenden Bits,

- Figur 14: eine perspektivische Ansicht einer Schraube und eines korrespondierenden Bits,

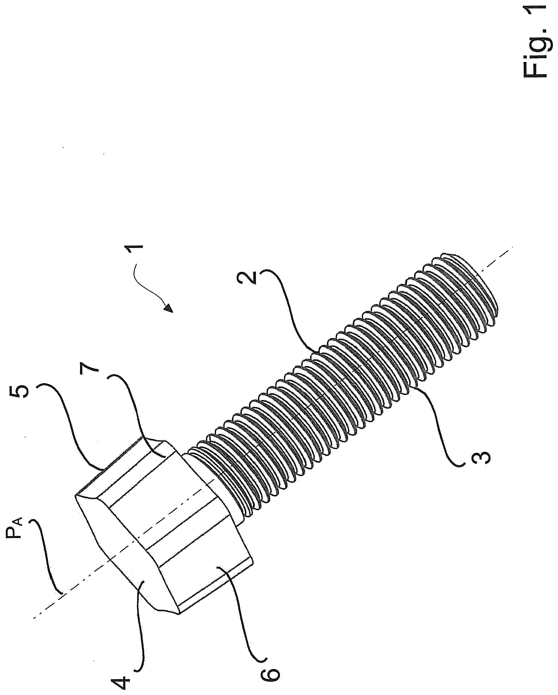

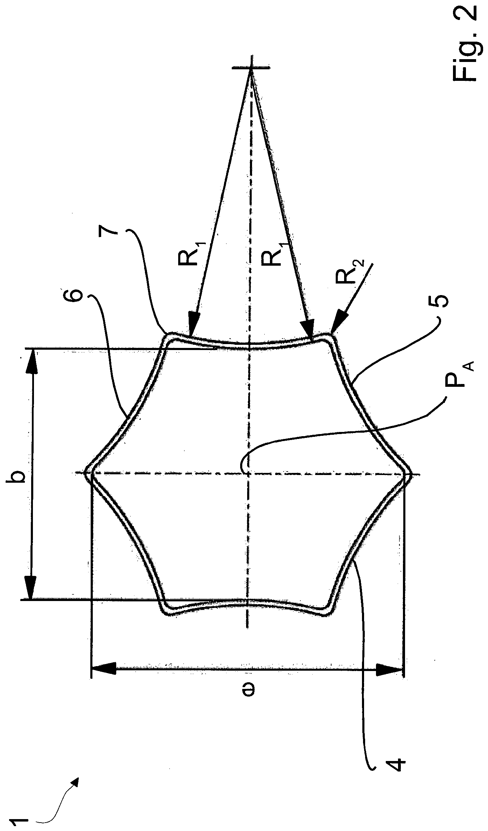

In den Figuren 1 und 2 ist eine Schraube 1 gemäß einer ersten nicht unter den Schutzumfang des Anspruchs fallend Ausführungsform dargestellt. Die Schraube 1 umfasst einen Schaft 2, der ein Außengewinde 3 trägt und eine Längsachse der Schraube 1 definiert. An dem oberen Ende des Schafts 2 ist ein Schraubenkopf 4 vorgesehen, der an seiner Außenseite ein äußeres Mitnahmeprofil 5 mit außenliegenden Antriebsflächen 6 aufweist, das eine koaxial zu der Längsachse der Schraube 1 liegende Profilachse P_{A} definiert. Konkret ist eine M8-Schraube 1 mit einer Schaftlänge von 40 mm und einer Kopfhöhe von 5,5 mm dargestellt. Wie die Figuren gut erkennen lassen, besitzt das äußere Mitnahmeprofil 5 im Querschnitt bzw. in der Draufsicht die Grundform eines regelmäßen Sechskants, dessen Seitenflächen Antriebsflächen 6 bilden, welchen gegenüber der Profilachse P_{A} bzw. der Längsachse der Schraube 1 unter einem Winkel α = 3° geneigt sind, so dass sie sich zu dem freien Ende des Schraubenkopfes 4 hin der Profilachse P_{A} annähern. Mit anderen Worten verjüngt sich der Schraubenkopf 4 zu seinem freien Ende hin.

Anders als bei herkömmlichen Schrauben mit Außensechskantangriff sind die Antriebsflächen 6 des äußeren Mitnahmeprofils 5 nicht eben, sondern im Querschnitt konkav, d.h. nach innen zur Profilachse P_{A} gekrümmt ausgebildet. Konkret besitzen die konkaven Antriebsflächen 6 im Querschnitt jeweils Kreisbogensegmentform, wobei der Radius R1 der Antriebsflächen 6 über die gesamte axiale Länge des Schraubenkopfes 4 konstant ist.

Die Antriebsflächen 6 sind im Bereich der Sechseckkanten durch Übergangsbereiche 7 voneinander getrennt, die kreisbogenförmig mit einem Radius R2 ausgebildet sind, der über die axiale Länge des Schraubenkopfes 4 konstant ist. Die Anordnung ist dabei so getroffen, dass die Antriebsflächen 6 und die Übergangsbereiche ohne Kantenbildung stetig ineinander übergehen.

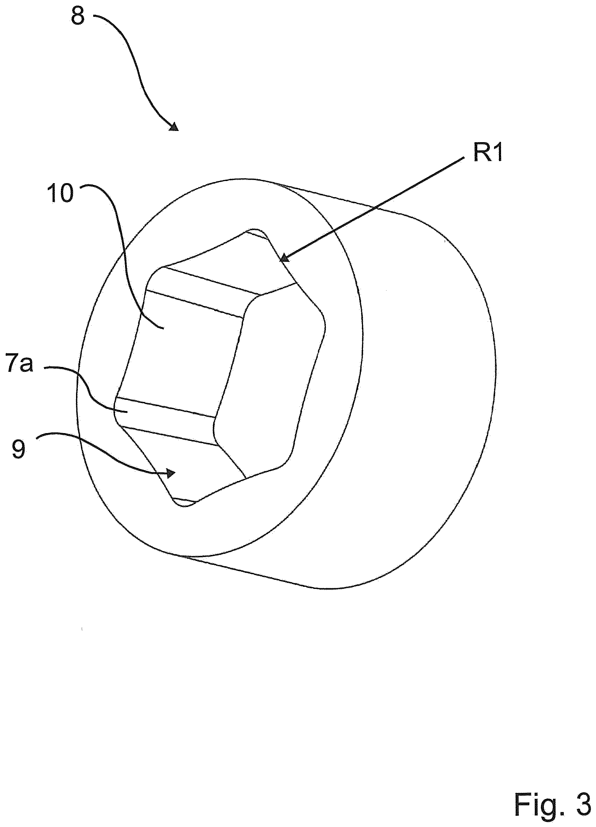

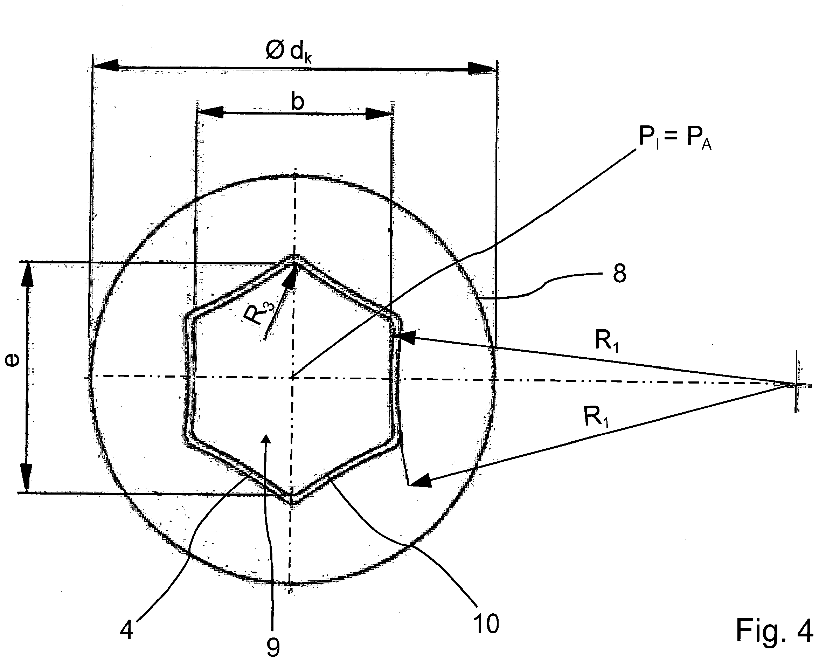

In den Figuren 3 und 4 ist ein Drehwerkzeug 8 in der Form eines Bits mit einem inneren Mitnahmeprofil 9 gezeigt, das zur Betätigung der in den Figuren 1 und 2 dargestellten Schraube 1 ausgebildet ist. Das Drehwerkzeug 8 besitzt ein inneres Mitnahmeprofil 9, das korrespondierend zu dem Schraubenkopf der Schraube 1 ausgebildet ist und eine Profilachse P_{I} definiert. Entsprechend besitzt das innere Mitnahmeprofil 9 im Querschnitt die Grundform eines Sechskants, wobei die Antriebsflächen 10 des Mitnahmeprofils 9 konkav, d.h. in Richtung der Profilachse P_{I} gekrümmt, ausgebildet sind und geneigt zu der Profilachse P_{I} verlaufen. Konkret sind die Antriebsflächen 10 wie die Antriebsflächen 6 der Schraube unter einem Winkel von 3° gegenüber der Profilachse P_{I} geneigt, wobei sie sich ausgehend von einer Aufnahme- oder Einstecköffnung des Bits zum innerhalb des Werkzeugs 8 liegenden Ende des inneren Mitnahmeprofils 9 der Profilachse Pi annähern. Mit anderen Worten verjüngt sich die Kontur des inneren Mitnahmeprofils 9 nach innen hin.

Des Weiteren sind die Antriebsflächen 10 als Kreisbogensegmente mit einem Radius R1 ausgebildet, der über die axiale Länge des Mitnahmeprofils 9 konstant ist und den gleichen Wert besitzt wie der Krümmungsradius R1 der Antriebsflächen 6 der Schraube 1. Die Antriebsflächen 10 werden durch Übergangsbereiche 7a voneinander getrennt, die kreisbogenförmig ausgebildet sind, wobei sie einen über die gesamte Länge des Mitnahmeprofils 9 konstant bleibenden Radius R3 besitzen. Die Anordnung ist so getroffen, dass die Übergangsbereiche der Schraube 1 und des Bits 8 nicht miteinander in Kontakt kommen. Entsprechend ist der Krümmungsradius R3 bei dem Bit 8 kleiner als der Krümmungsradius R2 bei der Schraube 1.

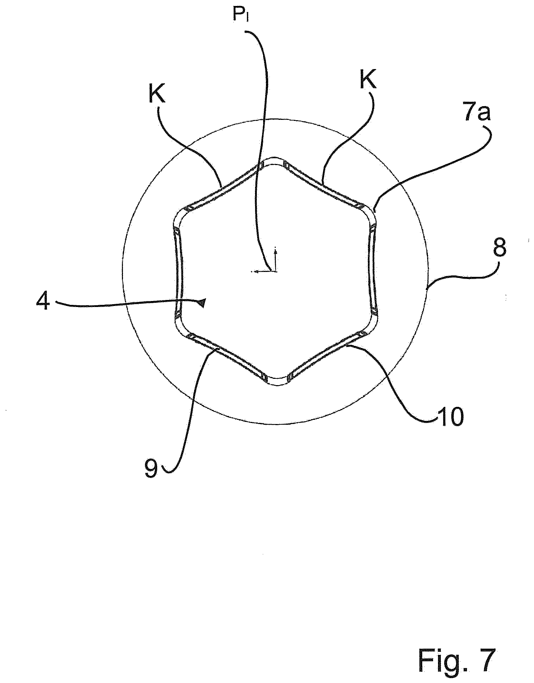

Die Anordnung ist so getroffen, dass - wie insbesondere die Figur 7 erkennen lässt, in denen Kontaktzonen K eingezeichnet ist, in welchen die Mitnahmeprofile 5, 9 in Anlage kommen - ein flächiger Kontakt/Eingriff ausschließlich im Bereich der Antriebsflächen 6, 10 stattfindet, nicht jedoch in den dazwischenliegenden Übergangsbereichen 7, 7a, und sich die Kontaktzonen K in Umfangsrichtung betrachtet jeweils beidseitig des Scheitelpunkts der konkav gekrümmten Antriebsflächen 6, 10 erstrecken. In dem dargestellten Ausführungsbeispiel erstrecken sich die Kontaktzonen K in Umfangsrichtung betrachtet jeweils über nahezu die gesamte Erstreckungslänge der Antriebsflächen 6, 10. Mit anderen Worten besteht zwischen den Antriebsflächen 6, 10 der beiden Bauteile 1, 8 eine nahezu vollflächige Anlage, so dass die beiden Bauteile 1, 8 exakt koaxial zueinander ausgerichtet werden, wenn die ihren beide Mitnahmeprofile 5, 9 axial zusammengesteckt werden, bis aufgrund der Konizität der Mitnahmeprofile der Antriebsflächen 6, 10 eine klemmende Verbindung zwischen den beiden Bauteilen 1, 8 hergestellt wird. Des Weiteren entsteht durch den flächigen Kontakt eine kraftschlüssige Verbindung, über welche sich hohe Drehmomente übertragen lassen.

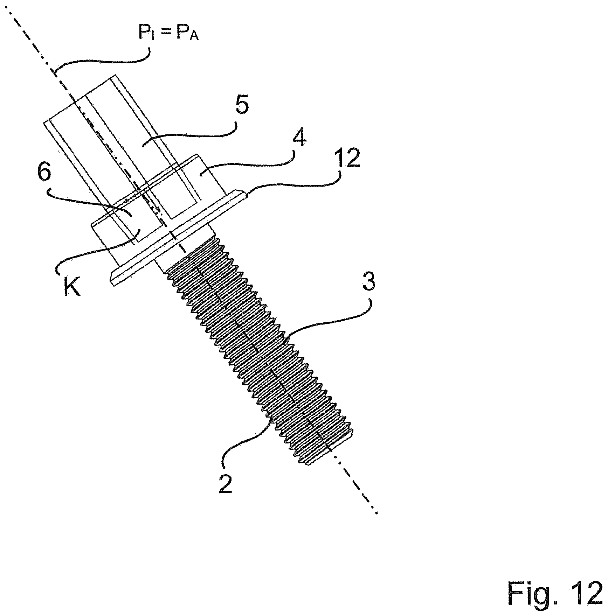

Auf diese Weise sind Abmessungen des äußeren Mitnahmeprofils 5 der Schraube 1 und des inneren Mitnahmeprofils 9 des Werkzeugs so gewählt, dass die Antriebsflächen 6, 10 der Mitnahmeprofile 5, 9 fast vollflächig aneinander in Anlage kommen, wenn die beiden Mitnahmeprofile 5, 9 axial zusammengesteckt werden. Wie in der Figur 12 dargestellt ist, kommen die Mitnahmeprofile 5, 9 ausschließlich im Bereich ihrer Antriebsflächen 6, 10 miteinander in Anlagen, die Kontaktzonen K sind in der Figur angedeutet, während zwischen den Antriebsflächen 6, 10 liegenden Übergangsbereichen 7 kein Kontakt stattfindet.

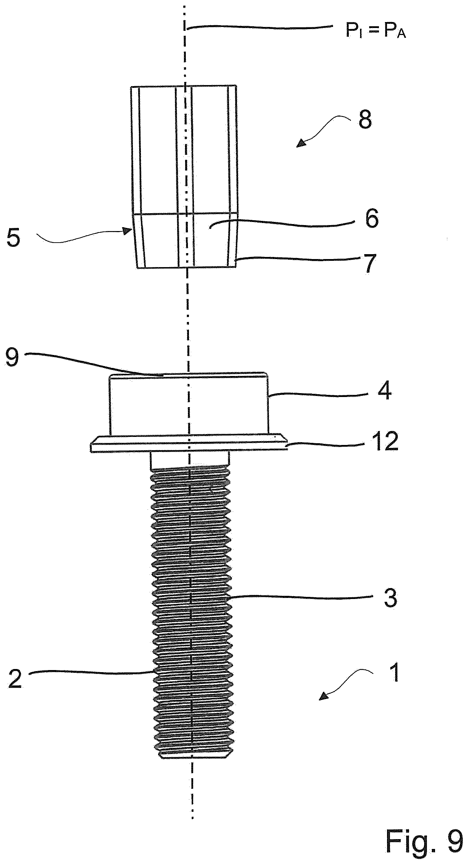

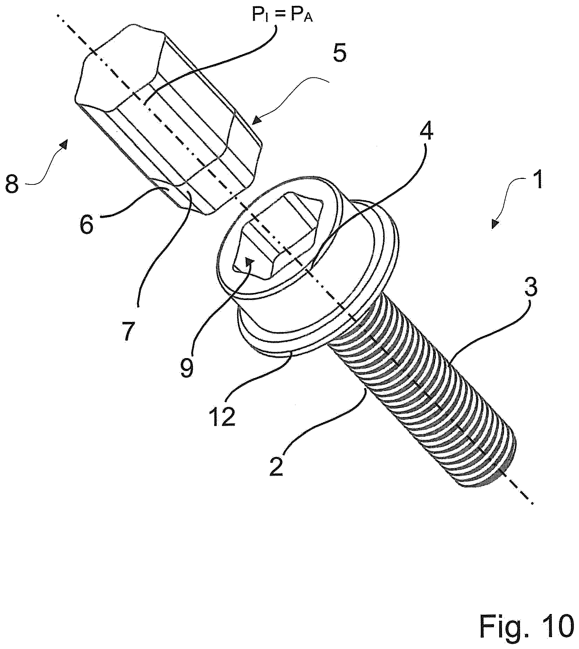

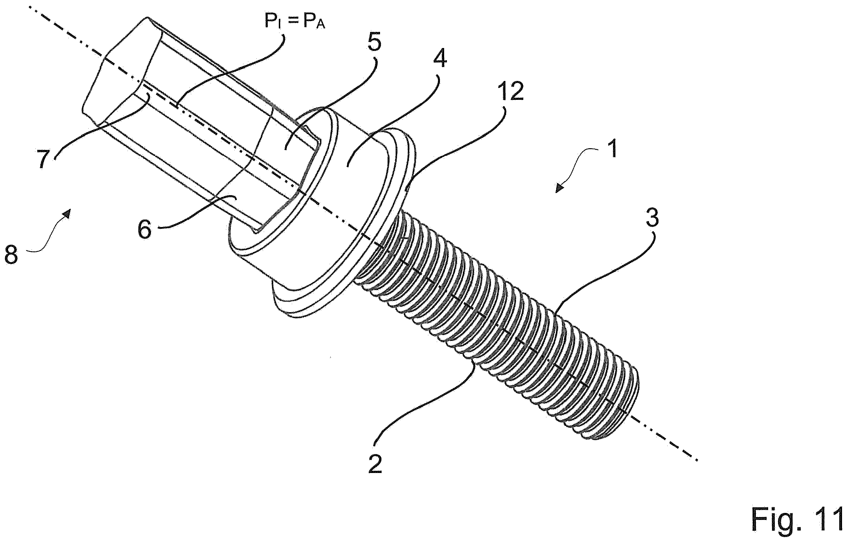

Die Figuren 9 bis 12 zeigen eine Schraube 1 und ein korrespondierendes Drehwerkzeug 8. Hierbei ist die Schraube 1 in Form eine Flanschkopfschraube mit einem Flansch 12 ausgebildet, der an der der zum Schaft 2 weisenden Seite des Schraubenkopfs 4 angeordnet ist. Die Konstellation der Mitnahmeprofile 2, 9 ist umgekehrt zu der der ersten Ausführungsform gewählt. Konkret weist die Schraube 1 das innere Mitnahmeprofil 9 mit innenliegenden Antriebsflächen 10 auf, während an dem Drehwerkzeug 8 das äußere Mitnahmeprofil 5 mit den außenliegenden Antriebsflächen 6 ausgebildet ist. Ansonsten sind die Mitnahmeprofile 5, 9 deutlich ausgebildet wie bei der ersten Ausführungsform. Beim axialen Zusammenstecken der beiden Mitnahmeprofile 5,9 dargestellt. Dabei kommen die Antriebsflächen 6, 10 der Mitnahmeprofile 5, 9 flächig miteinander in Anlage, um einerseits eine drehfeste Verbindung zwischen den Bauteilen 1, 8 herzustellen und andererseits die Mitnahmeprofile 5, 9 kraftschlüssig zu verbinden, so dass sie axial zueinander ausgerichtet und aneinander fixiert werden.

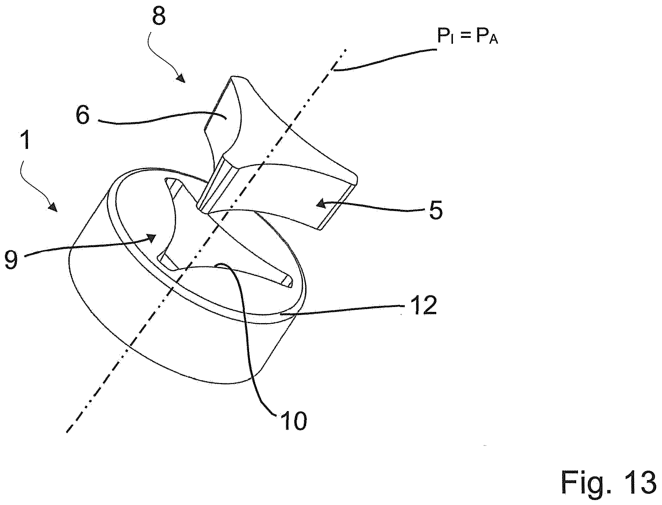

Die Figur 13 zeigt ein erstes Bauteil 1, das ein äußeres Mitnahmeprofil mit konkaven Antriebsflächen 6 und dazwischen liegenden Übergangsbereichen 7 aufweist, und einem Bauteil 8, das ein inneres Mitnahmeprofil 9 mit entsprechenden Antriebsflächen 10 und dazwischenliegenden Übergangsbereichen 7a aufweist. Konstruktiv sind die Mitnahmeprofile 5, 9 in gleicher Weise ausgebildet wie die Mitnahmeprofile 5, 9 bei den zuvor beschriebenen Ausführungsformen mit der einzigen Maßgabe, dass nur insgesamt drei statt insgesamt 6 Antriebsflächen 6, 10 vorhanden sind.

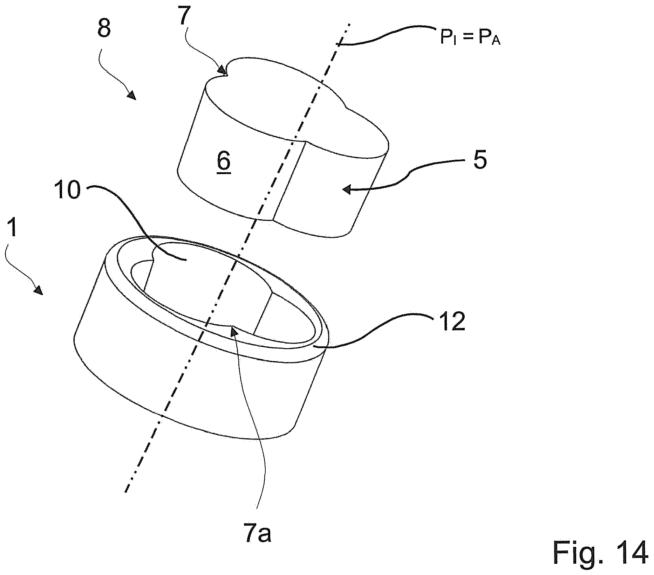

Die Figur 14 zeigt ein Bauteil 1, das ein äußeres Mitnahmeprofil 5 aufweist, und einem Bauteil 8, das ein korrespondierendes inneres Mitnahmeprofil 9 aufweist. Die Antriebsflächen 6, 10 sind hier als gegenüber der Profilachse P_{I}, P_{A} um einen Winkel α =3° geneigte Kreisbogenflächen ausgebildet, deren Radius R1 über die gesamte Länge der Mitnahmeprofile 5, 9 konstant ist. Im Unterschied zu den zuvor beschriebenen Ausführungsformen sind die Antriebsflächen 6, 10 jedoch nicht konkav, sondern konvex gewölbt.

In der Figur 14 nicht erkennbar ist, dass die Übergangsbereiche 7, 7a zwischen den Antriebsflächen 6, 10 abgerundet sind, um einen stetigen Übergang zwischen den Antriebsflächen 6, 10 zu schaffen. Die Übergangsbereiche 7, 7a sind dabei so ausgebildet, dass die beiden Bauteile 1, 8 in diesen Übergangsbereichen nicht miteinander in Kontakt kommen. Wenn die Übergangsbereiche 7, 7a als Kreisbogensegmente ausgebildet sind, besitzen sie bevorzugt einen Radius, der über ihre gesamte axiale Länge konstant ist, wobei der Radius bei dem Bauteil 8 mit dem inneren Mitnahmeprofil 9 größer ist als der Radius bei den Übergangsbereichen 7, 7a des Bauteils 1 mit dem äußeren Mitnahmeprofil 5.

## Patentansprüche

1. Verfahren zum drehfesten Verbinden zweier Bauteile, nämlich einer Schraube (1) und eines Drehwerkzeugs (8), bezüglich der Längsachse des als Schraube (1) ausgebildeten Bauteils, wobei eines der Bauteile ein äußeres Mitnahmeprofil (5) mit außenliegenden Antriebsflächen (6) und das andere Bauteil ein zu dem äußeren Mitnahmeprofil (5) komplementäres inneres Mitnahmeprofil (9) mit innenliegenden Antriebsflächen (10) aufweist, indem die Mitnahmeprofile (5, 9) der Bauteile axial zusammengesteckt werden, um durch das Zusammenwirken der Mitnahmeprofile (5, 9) eine formschlüssige, drehfeste Verbindung der Bauteile zu erzielen, wobei
- die Mitnahmeprofile (5, 9) jeweils eine Profilachse (PA, PI) definieren und die Profilachse (PA, PI) des als Schraube (1) ausgebildeten Bauteils koaxial zu dessen Längsachse verläuft,
- die Antriebsflächen (6) des Bauteils mit dem äußeren Mitnahmeprofil (5) gegenüber der Profilachse (PA, PI) des Bauteils geneigt sind und sich zu dem freien Ende des Bauteils hin der Profilachse (PA, PI) annähern,
- die Antriebsflächen (10) des Bauteils mit dem inneren Mitnahmeprofil (9) gegenüber der Profilachse (PA, PI) des Bauteils geneigt sind und sich zu dem freien Ende des Bauteils von der Profilachse (PA, PI) entfernen und
- die Mitnahmeprofile (2, 9) derart komplementär zueinander gewählt sind, dass die geneigten Antriebsflächen (6, 10) der Bauteile (1, 8) beim axialen Zusammenstecken der Bauteile (1, 8) flächig in Kontakt miteinander kommen, so dass durch das Zusammenwirken der Mitnahmeprofile (5, 9) eine kraftschlüssige Verbindung und/oder klemmende Verbindung, über welche die Bauteile (1 , 8) axial miteinander verbunden werden, zwischen den Bauteilen (1 , 8) entsteht,
**dadurch gekennzeichnet, dass**
Bauteile (1, 8) verwendet werden bei denen die Antriebsflächen (6, 10) der Mitnahmeprofile (5, 9) in den Kontaktbereichen, in denen sie flächig in Kontakt/Eingriff kommen, eine konstante Neigung gegenüber ihrer Profilachse (PA, PI) aufweisen, die bei allen Antriebsflächen beider Bauteile (1 , 8) gleich ist,
dass ein Bauteil mit einem äußeren Mitnahmeprofil (5) verwendet wird, bei dem die Antriebsflächen (6) im Querschnitt sämtlich konkav oder sämtlich konvex, d. h. nach innen oder nach außen gekrümmt ausgebildet sind und ein Bauteil mit einem zu dem äußeren Profil (5) komplementären inneren Mitnahmeprofil (9) verwendet wird, dessen Antriebsflächen (10) komplementär konvex/konkav zu den Antriebsflächen (6) des äußeren Mitnahmeprofils (5) gekrümmt sind, derart, dass im zusammengesteckten Zustand die Antriebsflächen (6, 10) der beiden Bauteile (1 , 8) in Umfangsrichtung betrachtet beidseits des Scheitelpunkts der konkaven/konvexen Krümmung flächig in Kontakt/Eingriff aneinander kommen, wobei zwischen den korrespondierenden Antriebsflächen (6, 10) der beiden Bauteile (1, 8) Kontaktzonen (K) gebildet werden, die sich in Umfangsrichtung betrachtet von einer Seite des Scheitelpunkts der konkaven/konvexen Krümmung über den Scheitelpunkt hinweg zu der gegenüberliegenden Seite des Scheitelpunkts erstrecken,
und dass die Mitnahmeprofile (5, 9) so ausgebildet sind, dass sie in den zwischen den Antriebsflächen (6, 10) liegenden Übergangsbereichen nicht in Kontakt miteinander kommen.

2. Verfahren nach Anspruch 1, **dadurch gekennzeichnet, dass** Bauteile (1, 8) verwendet werden, deren Antriebsflächen (6, 10) derart komplementär zueinander ausgebildet sind, dass die Antriebsflächen (6, 10) der beiden Bauteile (1, 8) über wenigstens 25 %, insbesondere wenigstens 40 % und bevorzugt wenigstens 60 % ihrer Erstreckung in Umfangsrichtung miteinander in flächigen Kontakt stehen.

3. Verfahren nach Anspruch 1 oder 2, **dadurch gekennzeichnet, dass** Bauteile (1, 8) verwendet werden, deren Antriebsflächen über ihre Länge einen parabelsegmentförmigen Querschnitt im Kontaktbereich besitzen, oder,
dass Bauteile (1, 8) verwendet werden, bei denen die Antriebsflächen (6, 10) der Mitnahmeprofile (5, 9) über ihre Länge einen kreisbogensegmentförmigen Querschnitt mit einem über die axiale Länge konstanten Radius (R1) im Kontaktbereich besitzen, oder,
dass Bauteile (1, 8) verwendet werden, bei denen die Antriebsflächen (6, 10) der Mitnahmeprofile (5, 9) einen kreisbogensegmentförmigen Querschnitt besitzen, wobei der Radius des kreisbogensegmentförmigen Querschnitts sich über die Länge der Antriebsflächen (6, 10) im Kontaktbereichen kontinuierlich verändert.

4. Verfahren nach einem der vorherigen Ansprüche, **dadurch gekennzeichnet, dass** Bauteile mit äußerem Mitnahmeprofil (5) und/oder mit innerem Mitnahmeprofil (9) verwendet werden, bei denen die zwischen den Antriebsflächen (6, 10) liegenden Übergangsbereiche eine entgegengesetzte Krümmung wie die Antriebsflächen (6, 10) aufweisen, wobei die Krümmung der Übergangsbereiche des äußeren Mitnahmeprofils (5) kleiner als die Krümmung der Übergangsbereiche des inneren Mitnahmeprofils (9) ist, wenn die Antriebsflächen des äußeren Mitnahmeprofils (5) konkav gekrümmt ausgebildet sind, so dass der Scheitelpunkt der Krümmung in Richtung der Profilachse weist, und die Krümmung der Übergangsbereiche des äußeren Mitnahmeprofils (5) größer als die Krümmung der Übergangsbereiche des inneren Mitnahmeprofils (9) ist, wenn die Antriebsflächen des äußeren Mitnahmeprofils konvex gekrümmt sind, wobei bevorzugt
die Übergangsbereiche des Bauteils mit äußerem Mitnahmeprofil (5) und/oder des Bauteil mit innerem Mitnahmeprofil (9) kreisbogensegmentförmig im Querschnitt ausgebildet sind, wobei die Radien (R2) der Übergangsbereiche des äußeren Mitnahmeprofils (5) größer als die Radien (R2) der Übergangsbereiche des inneren Mitnahmeprofils (9) sind, wenn die Antriebsflächen des äußeren Mitnahmeprofils konkav gekrümmt ausgebildet sind, so dass der Scheitelpunkt der Krümmung zu der Profilachse (PA) weist, und die Radien (R2) der Übergangsbereiche des äußeren Mitnahmeprofils kleiner als die Radien (R2) der Übergangsbereiche des inneren Mitnahmeprofils sind, wenn die Antriebsflächen des äußeren Mitnahmeprofils konvex gekrümmt sind,
und wobei die Radien (R2) der Übergangsbereiche über die Länge der Antriebsflächen (6, 10) bevorzugt konstant sind, und/oder
die Übergangsbereiche und die Antriebsflächen (6, 10) stetig ineinander übergehen.

5. Verfahren nach einem der vorherigen Ansprüche, **dadurch gekennzeichnet, dass** Bauteile verwendet werden, bei denen die Antriebsflächen (6, 10) der Mitnahmeprofile (5, 9) in dem Kontaktbereich um wenigstens 1 °, insbesondere um wenigstens 2° gegenüber der Profilachse (PA, Pi ) des jeweiligen Bauteils geneigt sind, und/oder dass Bauteile verwendet werden, bei denen die geneigten Antriebsflächen (6, 10) der Mitnahmeprofile (5, 9) um höchstens 8°, bevorzugt um höchstens 5° gegenüber der jeweiligen Profilachse (PA ,PI) geneigt sind, und/oder dass Bauteile verwendet werden, wobei insbesondere
Bauteile verwendet werden, bei denen die Antriebsflächen (6, 10) der Mitnahmeprofile (5, 9) im Kontaktbereich um wenigstens 1 ,5°, insbesondere wenigstens 2° und höchstens 3,5°, bevorzugt um 3° gegenüber der Profilachse (PA ,PI) des jeweiligen Bauteils geneigt sind.

6. Verfahren nach einem der vorhergehenden Ansprüche, **dadurch gekennzeichnet, dass** Bauteile verwendet werden, deren Mitnahmeprofile (5, 9) in Umfangsrichtung betrachtet 3, 4 oder 6 nebeneinanderliegenden Antriebsflächen (6, 10) mit dazwischen liegenden Übergangsbereichen aufweisen.

## Claims

1. Method for connecting two components, namely a screw (1) and a rotary tool (8), in a rotationally fixed manner with respect to the longitudinal axis of the component designed as a screw (1), wherein one of the components has an outer driving profile (5) with external drive surfaces (6) and the other component has an inner driving profile (9) being complementary to the outer driving profile (5) and having internal drive surfaces (10), by plugging the driving profiles (5, 9) of the components together axially in order to achieve a positive, rotationally fixed connection of the components by the interaction of the driving profiles (5, 9), wherein
- the driving profiles (5, 9) each define a profile axis (P_{A}, P_{I}) and the profile axis (P_{A}, P_{I}) of the component designed as a screw (1) extends coaxially to the longitudinal axis thereof,
- the drive surfaces (6) of the component with the outer driving profile (5) are inclined relative to the respective profile axis (P_{A}, P_{I}) of the component and approach the respective profile axis (P_{A}, P_{I}) towards the free end of the component,
- the drive surfaces (10) of the component with the inner driving profile (9) are inclined relative to the respective profile axis (P_{A}, P_{I}) of the component and become averted from the respective profile axis (P_{A}, P_{I}) towards the free end of the component, and
- the driving profiles (5, 9) are designed complementary to one another in such a way, that the inclined drive surfaces (6, 10) of the components (1, 8) come into surface contact with one another, when the components (1, 8) are plugged together axially, so that the interaction of the driving profiles (5, 9) produces a force-fit and/or clamping connection between the components (1, 8), via which the components (1, 8) are axially connected to one another,
**characterized in that**
components (1, 8) are used, in which the drive surfaces (6, 10) of the driving profiles (5, 9) have a constant inclination relative to their profile axis (P_{A,} P_{I}) in the contact regions, in which they come into surface contact/engagement, which inclination is the same for all drive surfaces of both components (1, 8), and
**in that** a component with an outer driving profile (5) is used, in which the drive surfaces (6) are all concave or all convex in cross-section, i.e. inwardly or outwardly curved, and a component with an inner driving profile (9) complementary to the outer driving profile (5) is used, the drive surfaces (10) of which inner driving profile (9) are curved in a complementary convex/concave manner with respect to the drive surfaces (6) of the outer driving profile (5) in such a way that, in the plugged state, the drive surfaces (6, 10) of the two components (1, 8), viewed in the circumferential direction, come into surface contact/engagement with one another on both sides of the apex of the concave/convex curvature, and
**in that** the driving profiles (5, 9) are designed in such a way that they do not come into contact with one another in the transition regions lying between the drive surfaces (6, 10).

2. Method according to claim 1, **characterized in that** components (1, 8) are used, the drive surfaces (6, 10) of which are designed to be complementary to one another in such a way that the drive surfaces (6, 10) of the two components (1, 8) are in surface contact with one another over at least 25%, in particular at least 40% and preferably at least 60% of their extent in the circumferential direction.

3. Method according to claim 1 or 2, **characterized in that** components (1, 8) are used, the drive surfaces (6, 10) of which have a parabolic segment-shaped cross-section in the contact region over their length, or
that components (1, 8) are used, in which the drive surfaces (6, 10) of the driving profiles (5, 9) have a circular arc segment-shaped cross-section over their length with a radius (R1) which is constant over the axial length in the contact region, or
that components (1, 8) are used, in which the drive surfaces (6, 10) of the driving profiles (5, 9) have a circular arc segment-shaped cross-section, wherein the radius of the circular arc segment-shaped cross-section changes continuously over the length of the drive surfaces (6, 10) in the contact region.

4. Method according to any of the preceding claims, **characterized in that** components with an outer driving profile (5) and/or with an inner driving profile (9) are used, in which the transition regions lying between the drive surfaces (6, 10) have an opposite curvature to that of the drive surfaces (6, 10), wherein the curvature of the transition regions of the outer driving profile (5) is smaller than the curvature of the transition regions of the inner driving profile (9), when the drive surfaces of the outer driving profile (5) are concavely curved so that the apex of the curvature faces in the direction of the profile axis, and the curvature of the transition regions of the outer driving profile (5) is larger than the curvature of the transition regions of the inner driving profile (9), when the drive surfaces of the outer driving profile are convexly curved, wherein, preferably,
the transition regions of the component with the outer driving profile (5) and/or of the component with the inner driving profile (9) are formed in the shape of a segment of a circle arc in cross-section, wherein the radii (R2) of the transition regions of the outer driving profile (5) are larger than the radii (R2) of the transition regions of the inner driving profile (9), when the drive surfaces of the outer driving profile are concavely curved so that the apex of the curvature faces the profile axis (P_{A}), and the radii (R2) of the transition regions of the outer driving profile are smaller than the radii (R2) of the transition regions of the inner driving profile, when the drive surfaces of the outer driving profile are convexly curved,
and wherein the radii (R2) of the transition regions are preferably constant over the length of the drive surfaces (6, 10), and/or
that the transition regions and the drive surfaces (6, 10) merge continuously into one another.

5. Method according to any of the preceding claims, **characterized in that** components are used, in which the drive surfaces (6, 10) of the driving profiles (5, 9) are inclined in the contact region by at least 1°, in particular by at least 2°, relative to the profile axis (P_{A}, P_{I}) of the respective component, and/or in that components are used, in which the inclined drive surfaces (6, 10) of the driving profiles (5, 9) are inclined by at most 8°, preferably by at most 5°, relative to the respective profile axis (P_{A}, P_{I}), wherein, in particular,
components are used, in which the drive surfaces (6, 10) of the driving profiles (5, 9) are inclined in the contact region by at least 1.5°, in particular at least 2° and at most 3.5°, preferably by 3°, relative to the profile axis (P_{A}, P_{I}) of the respective component.

6. Method according to any of the preceding claims, **characterized in that** components are used, the driving profiles (5, 9) of which, viewed in the circumferential direction, have 3, 4 or 6 drive surfaces (6, 10) lying next to one another with transition regions lying in between.

## Revendications

1. Procédé de liaison solidaire en rotation de deux composants, à savoir une vis (1) et un outil de tournage (8), par rapport à l'axe longitudinal du composant réalisé sous forme de vis (1), l'un des composants présentant un profil d'entraînement extérieur (5) avec des surfaces d'entraînement extérieures (6) et l'autre composant présentant un profil d'entraînement intérieur (9) complémentaire du profil d'entraînement extérieur (5) avec des surfaces d'entraînement intérieures (10), en ce que les profilés d'entraînement (5, 9) des composants sont emboîtés axialement l'un dans l'autre, afin d'obtenir, par la coopération des profilés d'entraînement (5, 9), une liaison par complémentarité de forme, solidaire en rotation, des composants, où
- les profilés d'entraînement (5, 9) définissent chacun un axe de profilé (PA, PI) et l'axe de profilé (PA, PI) de l'élément de construction réalisé sous forme de vis (1) s'étend coaxialement à son axe longitudinal,
- les surfaces d'entraînement (6) de l'élément avec le profil d'entraînement extérieur (5) sont inclinées par rapport à l'axe du profil (PA, PI) de l'élément et se rapprochent de l'axe du profil (PA, PI) vers l'extrémité libre de l'élément,
- les surfaces d'entraînement (10) de la pièce avec le profil d'entraînement intérieur (9) sont inclinées par rapport à l'axe du profil (PA, PI) de la pièce et s'éloignent de l'axe du profil (PA, PI) vers l'extrémité libre de la pièce et
- les profilés d'entraînement (2, 9) sont choisis complémentaires l'un de l'autre de telle sorte que les surfaces d'entraînement inclinées (6, 10) des composants (1,8) viennent en contact à plat l'une avec l'autre lors de l'emboîtement axial des composants (1, 8), de sorte qu'il se forme entre les composants (1, 8), par la coopération des profilés d'entraînement (5, 9), une liaison par adhérence et/ou une liaison par serrage par laquelle les composants (1, 8) sont reliés axialement l'un à l'autre,
**caractérisé en ce que**
des composants (1,8) sont utilisés dans lesquels les surfaces d'entraînement (6, 10) des profilés d'entraînement (5, 9) présentent, dans les zones de contact dans lesquelles elles entrent en contact/en prise à plat, une inclinaison constante par rapport à leur axe de profilé (PA , PI), qui est identique pour toutes les surfaces d'entraînement des deux composants (1, 8),
**en ce qu'**on utilise un composant avec un profil d'entraînement extérieur (5) dont les surfaces d'entraînement (6) sont toutes concaves ou toutes convexes en section transversale, c'est-à-dire tournées vers l'intérieur et vers l'extérieur. vers l'intérieur ou vers l'extérieur et un composant avec un profil d'entraînement intérieur (9) complémentaire au profil extérieur (5), dont les surfaces d'entraînement (10) sont courbées de manière complémentaire convexe/concave par rapport aux surfaces d'entraînement (6) du profil d'entraînement extérieur (5), est utilisé de telle sorte qu'à l'état assemblé, les surfaces d'entraînement (6, 10) des deux composants (1 , 8), considérées dans la direction circonférentielle, viennent en contact/en prise à plat l'une avec l'autre de part et d'autre du sommet de la courbure concave/convexe, des zones de contact (K) étant formées entre les surfaces d'entraînement correspondantes (6, 10) des deux composants (1, 8), lesquelles s'étendent, considérées dans la direction circonférentielle, d'un côté du sommet de la courbure concave/convexe, au-delà du sommet, jusqu'au côté opposé du sommet,
et **en ce que** les profilés d'entraînement (5, 9) sont conçus de telle sorte qu'ils n'entrent pas en contact les uns avec les autres dans les zones de transition situées entre les surfaces d'entraînement (6, 10).

2. Procédé selon la revendication 1, **caractérisé en ce que** l'on utilise des composants (1, 8) dont les surfaces d'entra nement (6, 10) sont conçues de manière complémentaire l'une par rapport à l'autre de telle sorte que les surfaces d'entra nement (6, 10) des deux composants (1, 8) sont en contact à plat l'une avec l'autre sur au moins 25 %, en particulier au moins 40 % et de préférence au moins 60 % de leur étendue dans la direction périphérique.

3. Procédé selon la revendication 1 ou 2, **caractérisé en ce qu'**on utilise des composants (1,8) dont les surfaces d'entraînement possèdent sur leur longueur une section transversale en forme de segment parabolique dans la zone de contact, ou,
que l'on utilise des composants (1,8) dans lesquels les surfaces d'entraînement (6, 10) des profilés d'entraînement (5, 9) possèdent sur leur longueur une section transversale en forme de segment d'arc de cercle avec un rayon (R1) constant sur la longueur axiale dans la zone de contact, ou,
**en ce que** l'on utilise des composants (1, 8) dans lesquels les surfaces d'entraînement (6, 10) des profilés d'entraînement (5, 9) possèdent une section transversale en forme de segment d'arc de cercle, le rayon de la section transversale en forme de segment d'arc de cercle variant en continu sur la longueur des surfaces d'entraînement (6, 10) dans les zones de contact.

4. Procédé selon l'une des revendications précédentes, **caractérisé en ce que** l'on utilise des composants avec un profil d'entraînement extérieur (5) et/ou avec un profil d'entraînement intérieur (9), dans lesquels les zones de transition situées entre les surfaces d'entraînement (6, 10) présentent une courbure opposée à celle des surfaces d'entraînement (6, 10), la courbure des zones de transition du profil d'entraînement extérieur (5) étant inférieure à la courbure des zones de transition du profil d'entraînement intérieur (9), lorsque les surfaces d'entraînement du profilé d'entraînement extérieur (5) sont réalisées avec une courbure concave, de sorte que le sommet de la courbure est orienté dans la direction de l'axe du profilé, et la courbure des zones de transition du profilé d'entraînement extérieur (5) est supérieure à la courbure des zones de transition du profilé d'entraînement intérieur (9), lorsque les surfaces d'entraînement du profilé d'entraînement extérieur sont réalisées avec une courbure convexe, de préférence
les zones de transition de l'élément avec profil d'entraînement extérieur (5) et/ou de l'élément avec profil d'entraînement intérieur (9) sont réalisées en forme de segment d'arc de cercle en section transversale, les rayons (R2) des zones de transition du profil d'entraînement extérieur (5) étant plus grands que les rayons (R2) des zones de transition du profil d'entraînement intérieur (9), lorsque les surfaces d'entraînement du profilé d'entraînement extérieur sont réalisées avec une courbure concave, de sorte que le sommet de la courbure est dirigé vers l'axe du profilé (PA), et les rayons (R2) des zones de transition du profilé d'entraînement extérieur sont plus petits que les rayons (R2) des zones de transition du profilé d'entraînement intérieur, lorsque les surfaces d'entraînement du profilé d'entraînement extérieur sont réalisées avec une courbure convexe,
et les rayons (R2) des zones de transition étant de préférence constants sur la longueur des surfaces d'entraînement (6, 10), et/ou
les zones de transition et les surfaces d'entraînement (6, 10) se fondent les unes dans les autres de manière continue.

5. Procédé selon l'une des revendications précédentes, **caractérisé en ce que** l'on utilise des composants dans lesquels les surfaces d'entraînement (6, 10) des profilés d'entraînement (5, 9) sont inclinées dans la zone de contact d'au moins 1°, en particulier d'au moins 2° par rapport à l'axe de profilé (PA, Pi ) du composant respectif, et/ou **en ce que** l'on utilise des composants dans lesquels les surfaces d'entraînement inclinées (6, 10) des profilés d'entraînement (5, 9) sont inclinées de 8° au maximum, de préférence de 5° au maximum, par rapport à l'axe de profilé respectif (PA, PI), et/ou **en ce que** l'on utilise des composants dans lesquels en particulier
des composants pour lesquels les surfaces d'entraînement (6, 10) des profilés d'entraînement (5, 9) sont inclinées dans la zone de contact d'au moins 1,5°, en particulier d'au moins 2° et au maximum de 3,5°, de préférence de 3° par rapport à l'axe du profilé (PA, PI) du composant respectif.

6. Procédé selon l'une des revendications précédentes, **caractérisé en ce que** l'on utilise des éléments de construction dont les profilés d'entraînement (5, 9), considérés dans la direction périphérique, présentent 3, 4 ou 6 surfaces d'entraînement (6, 10) juxtaposées avec des zones de transition situées entre elles.
